# EUROPÄISCHE PATENTANMELDUNG

(11) **EP 4 663 286 A1**
(43) Veröffentlichungstag der Anmeldung: **17.12.2025**
(21) Anmeldenummer: 25180559.4
(22) Anmeldetag: 03.06.2025
(51) Int. Cl.: B01J 2/02, B01F 25/25, B01J 2/06, B01J 13/00, B01J 2/00

(54) **VERFAHREN UND VORRICHTUNG ZUR BEARBEITUNG VON AUSGANGSSTOFFEN**

(30) Priorität: 10.06.2024 DE 102024116100
(71) Anmelder: Instillo GmbH, 66802 Überherrn (DE)
(72) Erfinder: Türeli, Akif Emre, 66802 Überherrn (DE); Penth, Felix, 66822 Lebach (DE)
(74) Vertreter: Patentanwaltskanzlei Vièl & Wieske PartGmbB

(57) **Zusammenfassung**

Die Erfindung betrifft ein Verfahren und eine Vorrichtung zur Bearbeitung einer Vielzahl an Ausgangsstoffen.

Es wird im Rahmen der Erfindung vorgeschlagen, dass mindestens ein Ausgangsstoff in Form eines unter Druck stehenden Flüssigkeitsstrahls, wobei der Druck des Flüssigkeitsstrahls 0,1 bis 1500 bar, bevorzugt 10 bis 800 bar und besonders bevorzugt 20 bis 300 bar beträgt, durch eine Düse geleitet und entspannt wird und anschließend zur Kollision mit einer Hilfsgeometrie in einem gas- und/oder flüssigkeitsgefüllten Raum gebracht wird.

## Beschreibung

Die Erfindung betrifft ein Verfahren und eine Vorrichtung zur Bearbeitung von Ausgangsstoffen.

Bei diesen Ausgangsstoffen kann es sich um Ausgangsstoffe in unterschiedlichsten Anwendungsfeldern handeln, insbesondere um pharmazeutische Wirkstoffe und Hilfsstoffe.

Zu den Anwendungsfeldern zählen die Herstellung von Mikro- und Nanopartikeln mit enger, steuerbarer Größenverteilung, die Herstellung und Stabilisierung von Emulsionen und liposomalen Formulierungen, sowie die Beschichtung von Partikeln.

Neben dem Einsatz für pharmazeutische Wirk- und Hilfsstoffe kann die Erfindung in gleicher Weise für biotechnologische und allgemein nasschemische Zwecke eingesetzt werden.

Vorrichtungen zur Herstellung von Nanopartikeln durch chemische Fällung und durch Zerkleinerung aus größeren Ausgangspartikeln sind bekannt.

Die DE 10 2006 004 350 A1 beschreibt nasschemische Strahlreaktoren, die zur Fällung von Nanopartikeln mehrere Flüssigkeitsstrahlen verwenden, die aufeinandertreffen oder in einer Mischkammer oder Prallzone miteinander reagieren. Hierbei treffen zwei Flüssigkeitsstrahlen auf eine Prallplatte, um eine Fällungsreaktion hervorzurufen.

Die EP 1 165 224 B1 beschreibt einen nasschemischen Strahlreaktor zur Fällung von Nanopartikeln mittels mehrerer Flüssigkeitsstrahlen, der auch zur Partikelmikronisierung und -beschichtung sowie zur Homogenisierung und Emulgierung verwendet werden kann.

Die DE 10 2019 112 382 A1 beschreibt die Verwendung eines Mikrojet-Reaktors zum Zellaufschluß. Dieser erfolgt mittels mehrerer aufeinanderprallender Flüssigkeitsstrahlen, die Zellen enthalten oder vollständig aus der fließfähigen Zellmasse bestehen.

Diesen und anderen Mikroreaktorsystemen gemein ist, dass zur Erfüllung ihrer Aufgabe zwei oder mehr Flüssigkeitsstrahlen benötigt werden. Auch sind viele Wirkstoffe nicht oder nur schlecht durch Fällung in dieser Weise herstellbar.

Die DE 10 2004 045 895 B4 beschreibt die Zerkleinerung von Pigmenten oder pharmazeutischen Wirkstoffen durch Aufschießen der Ausgangspartikel gegen eine Prallplatte mittels eines Druckluft- oder Gasimpulses.

Nachteilig an Druckluft- oder gasbetriebenen Systemen sind der große technische Aufwand und die hohen Kosten für die Erzeugung dieser Energie. Ein weiterer Nachteil bei druckluftbetriebenen Systemen bei der Arbeit mit Stäuben ist die Explosionsgefahr.

Die EP 0 300 402 B1 beschreibt die Partikelzerkleinerung auf Partikelgrößen von 1-5 µm oder weniger, indem aus einer homogenen Suspension größerer Partikel und Flüssigkeit eine Teilmenge entnommen wird und in Tropfenform auf eine Prallplatte geschossen wird.

Nachteilig an der Überführung in die Tropfenform ist die notwendige Energie zur Tropfenerzeugung, die zusätzlich zur kinetischen Energie aufgebracht werden muss. Mit der Tropfenbildung einher geht damit zwangsweise eine verminderte Energie, die für die Zerkleinerung der Partikel nicht mehr zur Verfügung steht, woraus ganz allgemein größere Partikel resultieren. Die Überführung in die Tropfenform wird zudem bei einer Vielzahl an Formulierungen und Stoffen unweigerlich mit einer starken Schaumbildung einhergehen.

Aufgabe der vorliegenden Erfindung ist es, die vorgenannten Probleme zu beseitigen.

Erfindungsgemäß wird diese Aufgabe bei einem Verfahren gemäß dem Oberbegriff dadurch gelöst, dass mindestens ein Ausgangsstoff in Form eines unter Druck stehenden Flüssigkeitsstrahls, wobei der Druck des Flüssigkeitsstrahls 0,1 bis 1.500 bar, bevorzugt 10 bis 800 bar und besonders bevorzugt 20 bis 300 bar beträgt, durch eine Düse geleitet und entspannt wird und anschließend zur Kollision mit einer Hilfsgeometrie in einem gas- und/oder flüssigkeitsgefüllten Raum gebracht wird.

Hierbei wird die Flüssigkeit unter Druck gesetzt und anschließend über eine Düse entspannt. In unmittelbarer Nähe der Düsenöffnung wird die Hilfsgeometrie angeordnet und die Flüssigkeit zur Kollision damit gebracht. Die dabei entstehenden Kräfte können für eine Reihe an Anwendungen nutzbar gemacht werden.

Es liegt somit genau ein Flüssigkeitsstrahl vor, der mit der Hilfsgeometrie kollidiert.

Bei der Hilfsgeometrie handelt es sich um eine vorzugsweise zweidimensionale Fläche aus einem ausreichend widerstandsfähigen Material, um eine Erosion am Kollisionspunkt zu vermeiden. Es liegt auch im Rahmen der Erfindung, daß die Hilfsgeometrie dreidimensional ausgestaltet ist.

Durch Suspendierung von Partikeln, insbesondere pharmazeutischer Wirk- und Hilfsstoffe, in der Flüssigkeit wird durch die einwirkenden Kräfte beim Aufprall eine Verringerung der durchschnittlichen Partikelgröße erreicht.

Durch Vermengung zweier nicht mischbarer Flüssigkeiten vor der Düse können Emulsionen erzeugt und unter Zugabe von Stabilisatoren oder Emulgatoren stabilisiert werden.

Durch Zugabe von Lipiden in die Flüssigkeit können Liposome erzeugt und andere Bestandteile, z.B. pharmazeutische Wirkstoffe, liposomal verkapselt werden.

Hierbei ist es erfindungsgemäß, wenn die Kollision in einem Gehäuse erfolgt, welches den Betrieb im gas- oder luftgefüllten und/oder im flüssigkeitsgefüllten Zustand ermöglicht. Die Schaumbildung wird insbesondere im flüssigkeitsgefüllten Zustand zu einem großen Teil oder ganz unterdrückt.

Es ist dabei zweckmäßig, wenn das Hindernis, mit dem der Flüssigkeitsstrahl kollidiert, aus einem möglichst harten Material mit einer Härte von mindestens 60 HRC, vorzugsweise mindestens 70 HRC, bevorzugt mindestens 80 HRC und besonders bevorzugt mindestens 90 HRC besteht, um Verschleiß am Kollisionspunkt zu mindern. Bewährt haben sich an dieser Stelle Stähle, bevorzugt rostfreie Edelstahllegierungen, Hartmetalle und Keramiken, hierbei bevorzugt Aluminiumoxid, Titandioxid, Siliciumcarbid und Diamant.

In einer Ausführung der Erfindung sind dabei die Düse und die Kollisionsgeometrie in ihrem Abstand zueinander variierbar. Zusammen mit einer Prozessdruckregelung lassen sich somit unter Anwendung empirischer Daten durchschnittliche resultierende Partikelgrößen oder Tröpfchengrößen eines Mikronisierungs- oder Emulgierungsprozesses einstellen. Durch Begrenzung der Prozessenergie durch diese zwei Parameter ergeben sich untere Schranken der Partikel- oder Tröpfchengröße. Bei Kreislaufführung des Prozesses kann zudem über die Prozesszeit die Breite der Partikelgrößenverteilung verringert werden, da die Partikel nicht kleiner als diese untere Schranke werden, sich aber alle größeren Partikel über die Prozesszeit dieser Schranke nähern.

Es ist dabei erfindungsgemäß, die Vorrichtung so zu gestalten, dass ihre Düsen austauschbar sind.

Es ist dabei zweckmäßig, wenn das Gehäuse aus einem T- oder X- förmigen Formteil mit Klemmflanschen besteht, so dass zwei jeweils gegenüberliegenden Flansche als Befestigung für Düsen und Kollisionsgeometrie oder zwei Düsen dienen können. Klemmflansche dieser Art, wie sie beispielsweise in DIN 32676 oder DIN 11854-3 beschrieben sind, sind auf Grund ihrer guten Reinigbarkeit, Spaltarmut und leichten Demontierbarkeit gängige Praxis in der Pharma-, Kosmetik- und Lebensmittelindustrie, so dass übliche Formteile und Fittings für einen Großteil der Vorrichtung verwendet werden können.

Es kann dabei vorteilhaft sein, den Kollisionsraum mit einem Gas, z.B. einem Inertgas, zu spülen, wofür sich die Verwendung der X-förmigen Vorrichtung besonders eignet.

Es ist dabei erfindungsgemäß, dass die Düse eine Vollstrahldüse ist, wobei der Düsendurchmesser im Bereich 20 µm-5.000 µm, bevorzugt im Bereich 50 µm-3.000 µm und besonders bevorzugt im Bereich von 100 µm-2.000 µm liegt.

Es ist ebenfalls erfindungsgemäß, daß die Düse eine Ein- oder Mehrstoff-Sprühdüse oder Flachstrahldüse ist.

In einer Ausführung der Erfindung erfolgt die Anordnung von Gehäuse und Flüssigkeitsauslass derart, dass sich das Gehäuse während des Anfahrprozesses mit prozessierter Flüssigkeit füllt und die Kollision daher im flüssigkeitsgefüllten Raum stattfindet. Die Anordnung in dieser Weise mindert häufig die Schaumentwicklung unter oft nur leichter Beeinträchtigung des Prozessergebnisses.

In einer Ausführung der Erfindung erfolgt die Anordnung von Gehäuse und Flüssigkeitsauslass derart, dass das Gehäuse während des Prozesses gas- oder luftgefüllt bleibt oder gas- oder luftdurchströmt wird und die Kollision somit im gasgefüllten Raum stattfindet.

Die erfindungsgemäße Vorrichtung eignet sich insbesondere
- zur Herstellung liposomaler Verkapselungen
- zur Herstellung von Emulsionen
- zur Oberflächenbeschichtung von suspendierten Partikeln und
- zur Herstellung von Mikro- und Nanopartikeln.

Nachfolgend werden Ausführungen der Erfindung anhand von Zeichnungen näher beschrieben.

Es zeigen
- Fig. 1: eine erfindungsgemäße Vorrichtung im Querschnitt,
- Fig. 2:: eine weitere erfindungsgemäße Vorrichtung im Querschnitt,
- Fig. 3: ein Prozessschema enthaltend eine erfindungsgemäße Vorrichtung,
- Fig. 4: eine andere erfindungsgemäße Vorrichtung im Querschnitt.

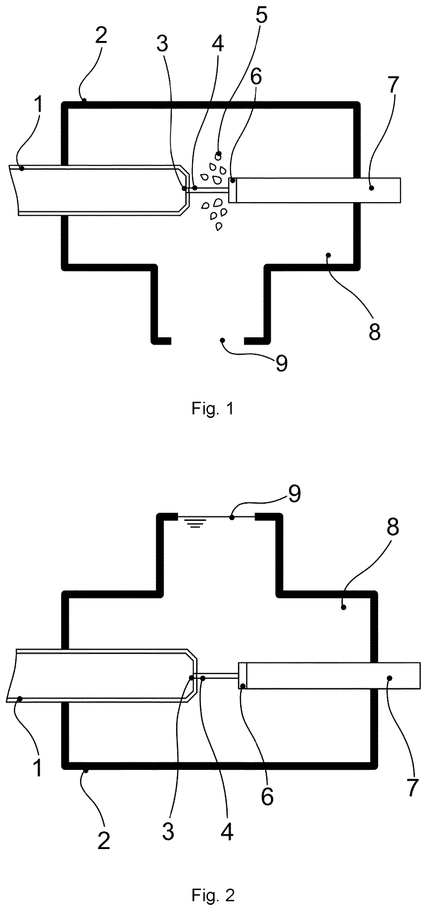

Eine erfindungsgemäße Vorrichtung ist in Fig. 1 gezeigt. Hierin wird in einem gasgefüllten Raum (8) eines Gehäuses (2) die unter Druck gesetzte Prozessflüssigkeit über eine Leitung (1) einer axial verschiebbaren Düse (3) zugeführt und über diese Düse in einem Vollstrahl (4) entspannt. Der Strahl trifft auf eine an einer axial verschiebbaren Befestigung (7) angebrachte Hilfsgeometrie (6) und das Kollisionsprodukt (5) verlässt den gasgefüllten Raum (8) des Gehäuses (2) über den Auslass (9).

Fig. 2 zeigt die Vorrichtung aus Fig. 1 in einer Anordnung mit oben befindlichem Auslass (9). Hierin füllt das Kollisionsprodukt den Raum (8), bevor es das Gehäuse (2) über den Auslass verlässt.

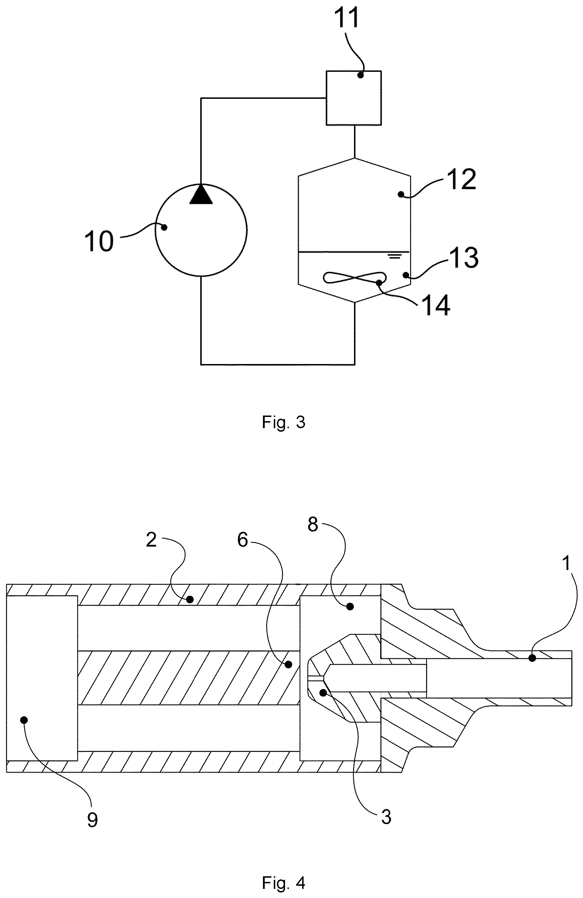

Fig. 3 zeigt eine in einen Kreislaufprozess eingebettete erfindungsgemäße Vorrichtung (11). Hierbei wird die Prozessflüssigkeit (13) von einer Pumpe (10) aus dem Speisetank (12) entnommen, auf Druck gebracht und in die Vorrichtung gepumpt. Nach Verlassen der Vorrichtung (11) wird sie wieder in den Speisetank befördert. Dieser kann mit einem Mischer (14) durchmischt werden.

Fig. 4 zeigt eine erfindungsgemäße Vorrichtung, worin in einem Gehäuse (2) die unter Druck gesetzte Prozessflüssigkeit über eine Leitung (1) in eine Düse (3) gebracht und über die Düse in einem Vollstrahl in einem flüssigkeits- oder gasgefüllten Raum (8) entspannt wird. Hierbei wird der Strahl in Kollision mit der Prallgeometrie (6) gebracht. Das Kollisionsprodukt verlässt den Raum über den Auslass (9).

Nachfolgend wird die Verwendung der erfindungsgemäßen Vorrichtung für die Herstellung pharmazeutischer Nanopartikel anhand von Ausführungsbeispielen beschrieben.

### Beispiel 1

Ein Mikroorganismus wird in einem flüssigen Medium vorsuspendiert und in einen Behälter gefüllt. Aus diesem Behälter wird das Medium mittels einer Pumpe entnommen und durch die Vorrichtung prozessiert. Das prozessierte Medium wird in den Behälter zurückgeführt.

### Beispiel 2

20 g getrocknete Spirulina platensis werden mittels eines Laborrührers in 200 ml Wasser suspendiert. Die Suspension wird mittels einer Membranpumpe angesaugt, auf 100 bar gebracht und in der Vorrichtung durch eine Vollstrahldüse mit einem Durchmesser von 200µm beschleunigt und zur Kollision mit einem Rundstab aus Edelstahl gebracht. Das Kollisionsprodukt wird in den Behälter zurückgeführt. Nach 30 Minuten ist der Prozess abgeschlossen.

### Beispiel 3

Eine Emulgierung wurde unter Verwendung von Olivenöl als Ölphase durchgeführt. Als kontinuierliche Phase wurde eine tensidhaltige Wasserphase verwendet.

| Nummer | Zeit [min] | Flussrate [ml/min] | Düsendurchmessser [µm] | Partikelgröße [nm] | Polydispersitätsindex (PDI) |
|---|---|---|---|---|---|
| 1 | 2 | 500 | 500 | 172 | 0.12 |
| 2 | 5 | 500 | 500 | 131 | 0.05 |
| 3 | 10 | 500 | 500 | 105 | 0.05 |

Eine Reduzierung der Partikelgröße und des Polydispersitätsindexes (PDI) wurde mit steigender Mischrate beobachtet.

### Beispiel 4

Eine 10 % Curcumin-Suspension mit 0,5 % Pluronic F127 wurde mit einer Flussrate von 250 ml/min gepumpt. Der Düsendurchmesser betrug 200 µm. Im Laufe der Zeit wurde eine Abnahme der Partikelgröße beobachtet.

| Zeit [min] | Partikelgröße [nm] |
|---|---|
| 0 min | 50000 |
| 30 min | 450 |
| 60 min | 375 |
| 90 min | 290 |
| 120 min | 158 |

### Beispiel 5

5kg einer 20 %-igen Ibuprofen-Suspension in Wasser mit 0,5 % Hydroxypropylmethylcellulose wurden mit 290 bar Druck mit einem Massenstrom von von 7,7 kg/min durch eine Vollstrahldüse mit einem Düsendurchmesser von 840 µm gepumpt. Im Laufe der Zeit wurde eine Abnahme der Partikelgröße beobachtet.

| Zeit [min] | Partikelgröße [nm] | Polydispersitätsindex (PDI) |
|---|---|---|
| 30 | 30,69 | 0,128 |
| 60 | 23,64 | 0,192 |
| 90 | 19,54 | 0,14 |

### Beispiel 6

4 kg einer 20%-igen Ibuprofen-Suspension in Wasser mit 0,3% Hydroxypropylmethylcellulose wurden bei 90 bar Druck und einem Massenstrom von 4,25 kg/min mit einer Vollstrahldüse mit 840µm Düsendurchmesser prozessiert. Über die Prozesszeit wurde eine Abnahme der Partikelgröße beobachtet.

| Zeit [min] | Partikelgröße [nm] | Polydispersitätsindex (PDI) |
|---|---|---|
| 5 | 188,5 | 1 |
| | 286 | 1 |
| 10 | 151,1 | 1 |
| | 161,3 | 1 |
| 15 | 103,6 | 0,527 |
| | 114 | 0,65 |
| 20 | 87,67 | 0,349 |
| | 92,88 | 0,266 |
| 25 | 69,09 | 0,073 |
| | 68,85 | 0,072 |
| 30 | 58,14 | 0,037 |
| | 60,17 | 0,011 |
| 40 | 43,11 | 0,1 |
| | 49,47 | 0,069 |

### Beispiel 7

Eine Emulsion bestehend aus 1,04 kg all-rac-alpha-Tocopherol, 3,12 kg mittelkettige Triglyceride, 76 kg modifizierte Stärke, 18,2 kg Saccharose, 4,17 kg Natriumascorbat und 97 kg Wasser wurde bei 70°C bei 70 bar über 4 Düsen mit jeweils 1000µm Durchmesser prozessiert. Über die Prozesszeit wurde eine Abnahme der Partikelgröße beobachtet.

| Zeit [min] | Partikelgröße [nm] | Polydispersitätsindex (PDI) |
|---|---|---|
| 0 | 1502 | 0,647 |
| 15 | 301 | 0,194 |
| 30 | 268,7 | 0,133 |
| 90 | 217,9 | 0,004 |
| 135 | 190,7 | 0,062 |
| 180 | 170,8 | 0,073 |
| 250 | 171,2 | 0,043 |

## Patentansprüche

1. Verfahren zur Bearbeitung von Ausgangsstoffen, **dadurch gekennzeichnet, dass** mindestens ein Ausgangsstoff in Form eines in einer Leitung (1) geführten unter Druck stehenden Flüssigkeitsstrahls, wobei der Druck des Flüssigkeitsstrahls 0,1 bis 1500 bar, bevorzugt 10 bis 800 bar und besonders bevorzugt 20 bis 300 bar beträgt, durch eine Düse (3) geleitet und entspannt wird und anschließend zur Kollision mit einer Hilfsgeometrie (6) in einem gas- und/oder flüssigkeitsgefüllten Raum (8) gebracht wird.

2. Verfahren nach Anspruch 1, **dadurch gekennzeichnet, dass** Partikel, insbesondere pharmazeutische Wirk- und Hilfsstoffe, in der Flüssigkeit suspendiert sind.

3. Verfahren nach Anspruch 1 oder Anspruch 2, **dadurch gekennzeichnet, dass** Mikroorganismen, insbesondere Bakterien, Algen und Pilzen oder tierische, pflanzlicher oder menschliche Zellen, in der Flüssigkeit suspendiert sind.

4. Verfahren nach einem der Ansprüche 1 bis 3, **dadurch gekennzeichnet, dass** zwei nicht mischbare Ausgangsstoffe in dem Flüssigkeitsstrahl vorliegen.

5. Verfahren nach einem der Ansprüche 1 bis 4, **dadurch gekennzeichnet, dass** der Flüssigkeitsstrahl Stabilisatoren oder Emulgatoren enthält.

6. Verfahren nach einem der Ansprüche 1 bis 4, **dadurch gekennzeichnet, dass** der Flüssigkeitsstrahl Lipide enthält.

7. Vorrichtung zur Bearbeitung von Ausgangsstoffen gemäß einem Verfahren nach den Ansprüchen 1 bis 6, **dadurch gekennzeichnet, dass** Mittel zum Beaufschlagen mit Druck eines in einer Leitung (1) geführten Flüssigkeitsstrahls vorgesehen sind, wobei die Leitung (1) in einer Düse (3) endet, durch die die Flüssigkeit austreten kann und eine Hilfsgeometrie (6) im Bereich der Düse (3) angeordnet ist, mit der die aus der Düse (3) austretende Flüssigkeit kollidiert.

8. Vorrichtung gemäß Anspruch 7, **dadurch gekennzeichnet, dass** die Hilfsgeometrie (6) eine Platte aus einem harten Material, bevorzugt einem nichtrostenden Edelstahl oder einer Keramik, hierbei bevorzugt Aluminiumoxid oder Siliciumcarbid, besteht.

9. Vorrichtung nach Anspruch 7 oder Anspruch 8, **dadurch gekennzeichnet, dass** die Düse (3) eine Vollstrahldüse ist, und die Düsengröße im Bereich 20 µm-5000µm, bevorzugt im Bereich 50 µm-3000µm und besonders bevorzugt im Bereich 100 µm-2000µm liegt.

10. Vorrichtung nach Anspruch 7 oder Anspruch 8, **dadurch gekennzeichnet, dass** die Düse (3) eine Ein- oder Mehrstoff-Sprühdüse oder eine Flachstrahldüse ist.

11. Vorrichtung nach einem der Ansprüche 7 bis 10, **dadurch gekennzeichnet, dass** der Abstand zwischen Düse (3) und Hilfsgeometrie (6) variabel verstellbar ist.

12. Vorrichtung nach einem der Ansprüche 7 bis 11, **dadurch gekennzeichnet, dass** der Kollisionswinkel, mit dem der Flüssigkeitsstrahl auf die Hilfsgeometrie (6) trifft, ein von 90° abweichender Winkel ist.

13. Verwendung der Vorrichtung nach den Ansprüchen 7 bis 12 zur Herstellung liposomaler Verkapselungen oder zur Herstellung von Emulsionen oder zur Oberflächenbeschichtung von suspendierten Partikeln oder zur Herstellung von Mikro- und Nanopartikeln.
